# EUROPÄISCHE PATENTSCHRIFT

(11) **EP 3 564 699 B1**
(45) Veröffentlichungstag und Bekanntmachung des Hinweises auf die Patenterteilung: **29.09.2021**
(21) Anmeldenummer: 19158660.1
(22) Anmeldetag: 21.02.2019
(51) Int. Cl.: G01S 7/02, G01S 7/41, G01S 13/02, G01S 13/34, G01S 13/44, G01S 13/58, G01S 13/87, G01S 13/931

(54) **VERFAHREN ZUR ERMITTLUNG EINER ABSOLUTEN GESCHWINDIGKEIT EINES WEITEREN VERKEHRSTEILNEHMERS UND KRAFTFAHRZEUG**
METHOD FOR DETERMINING AN ABSOLUTE VELOCITY OF A FURTHER ROAD USER AND MOTOR VEHICLE
PROCÉDÉ DE DÉTERMINATION DE LA VITESSE ABSOLUE D'UN AUTRE USAGER DE LA ROUTE ET VÉHICULE AUTOMOBILE

(30) Priorität: 04.05.2018 DE 102018206963
(43) Veröffentlichungstag der Anmeldung: 06.11.2019
(73) Patentinhaber: AUDI AG, 85045 Ingolstadt (DE)
(72) Erfinder: Khlifi, Rachid, 85748 Garching (DE)

(56) Entgegenhaltungen:
- DE-A1-102012 021 461
- DE-A1-102015 009 308

## Beschreibung

Die Erfindung betrifft ein Verfahren zur Ermittlung einer absoluten Geschwindigkeit eines weiteren, Räder aufweisenden Verkehrsteilnehmers in einem Kraftfahrzeug, welches wenigstens einen Radardaten des insbesondere parallel zu dem Kraftfahrzeug fahrenden, weiteren Verkehrsteilnehmers erfassenden Radarsensor aufweist. Daneben betrifft die Erfindung ein Kraftfahrzeug.

Fahrerassistenzsysteme für Kraftfahrzeuge wurden im Stand der Technik bereits in einer Vielzahl von Ausgestaltungen vorgeschlagen. Sie nutzen für wenigstens eine Funktion Eingangsdaten, die Umstände in dem und/oder um das eigene Kraftfahrzeug beschreiben und können diese beispielsweise gegen Maßnahmenkriterien auswerten, bei deren Erfüllung das Fahrerassistenzsystem eine Maßnahme durchführt, beispielsweise einen Fahreingriff, eine Informationsausgabe, insbesondere eine Warnung an den Fahrer, und/oder die Anpassung von Betriebsparametern eines weiteren Fahrzeugsystems. Bei den Eingangsdaten handelt es sich dabei häufig um (gegebenenfalls vorausgewertete) Sensordaten verschiedener Sensoren des Kraftfahrzeugs, bei auf das Umfeld des Kraftfahrzeugs bezogenen Fahrerassistenzsystemen mithin auch von Umgebungssensoren. Ein häufig im Rahmen von Fahrerassistenzsystemen eingesetzter Sensor ist ein Radardaten über die Umgebung des Kraftfahrzeugs liefernder Radarsensor.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme. Auch die Nutzung von Radarsensoren im Innenraum des Kraftfahrzeugs wurde bereits vorgeschlagen.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Insbesondere bei Sicherheitssystemen als typisches Beispiel von Fahrerassistenzsystemen spielt die Erfassung von dynamischen und statischen Zielen im Umfeld des eigenen Kraftfahrzeugs, insbesondere von weiteren Verkehrsteilnehmern, eine wichtige Rolle. Abhängig von erkannten Objekten in der Umgebung des Kraftfahrzeugs und deren Eigenschaften kann eine Bewertung der Verkehrssituation durchgeführt werden, die wiederum, wie bereits beschrieben, zu Maßnahmen führen kann, beispielsweise einer Warnung für den Fahrer. Dabei wurde vorgeschlagen, zur Vermeidung von Falsch- und/oder Fehlwarnungen in komplexeren Verkehrssituationen in einer Vorstufe zur Auswertung von Maßnahmenkriterien eine Situationsanalyse (SITA) der aktuellen Verkehrssituation durchzuführen. Bei der SITA können eine Vielzahl von die aktuelle Verkehrssituation beschreibenden Daten, insbesondere auch Radardaten, herangezogen werden, um eine gute Grundlage für den eigentlichen, Maßnahmenkriterien auswertenden Algorithmus zu geben.

Radarsensoren sind auch dafür geeignet, die relative radiale Bewegung von Zielen bzw. Objekten, insbesondere weiterer Verkehrsteilnehmer, relativ zum eigenen Kraftfahrzeug zu vermessen. Hieraus lässt sich auch eine Information über die absolute Geschwindigkeit der weiteren Verkehrsteilnehmer ermitteln. Bewegt sich allerdings der weitere Verkehrsteilnehmer nicht radial zum eigenen Kraftfahrzeug, so ist eine unmittelbare Geschwindigkeitsmessung nicht möglich. Dabei wird im heutigen Stand der Technik die Dopplervermessung verwendet, um die Geschwindigkeit bewegter Objekte zu vermessen. Die relative radiale Bewegung zum eigenen Kraftfahrzeug verursacht eine Dopplerverschiebung, die mittels der Radarsensoren erfasst werden kann.

Liegt allerdings keine oder nur eine kleine relative radiale Bewegung der Objekte vor, so ist es nicht möglich, mit der Radarsensorik die radiale Geschwindigkeit der weiteren Verkehrsteilnehmer zu vermessen. Diese Verkehrssituation liegt beispielsweise bei parallelen Fahrten zwischen dem eigenen Kraftfahrzeug und dem weiteren Verkehrsteilnehmer vor. Befindet sich der weitere Verkehrsteilnehmer im toten Winkel, ist eine Messung der absoluten Geschwindigkeit des weiteren Verkehrsteilnehmers mittels der relativen Radialgeschwindigkeit nicht möglich. Auch die bei parallelen Fahrten häufig sehr kleinen Abstände erschweren es deutlich, die Geschwindigkeit weiterer Verkehrsteilnehmer zu ermitteln. Daher wurde vorgeschlagen, die absolute Geschwindigkeit von weiteren Verkehrsteilnehmern, bei denen die Radarmessung keine verlässlichen Daten liefert, zu prädizieren und somit nicht mehr direkt zu vermessen.

DE 10 2015 004 468 A1 betrifft ein Verfahren zum Betrieb eines Fahrerassistenzsystems und ein Kraftfahrzeug, wobei vorgeschlagen wird, Positionsinformationen einer vorderen und einer hinteren Felge eines weiteren Verkehrsteilnehmers aus Radardaten zu ermitteln und aus den Positionsinformationen eine relative Orientierung des Verkehrsteilnehmers zu dem Kraftfahrzeug zu bestimmen. Die relative Orientierung wird durch wenigstens eine Funktion des Fahrerassistenzsystems berücksichtigt, insbesondere bei Sicherheitssystemen zur Ermittlung einer Kollisionswahrscheinlichkeit. Dabei werden insbesondere die auch eingangs beschriebenen, auf Halbleitertechnologie, insbesondere CMOS-Technologie, basierenden Radarsensoren eingesetzt. Bezüglich der Geschwindigkeit eines weiteren Verkehrsteilnehmers wird nichts ausgeführt.

DE 10 2012 200 261 A1 betrifft eine Anordnung und ein Verfahren zum Erfassen einer Drehzahl eines Turboladers. Dabei werden von einem Maschinenelement des Turboladers reflektierte Radarwellen erfasst und als Messsignal bereitgestellt, wobei die Drehzahl des Turboladers anhand einer Auswertung des Messsignals ermittelt wird. Je nach Anstrahlwinkel des Radarsensors in Bezug auf den Turbolader kommt es zu Signalauslöschungen beim Empfangssignal des Radarsensors, welche zur Ermittlung der Drehzahl genutzt werden können.

DE 10 2015 218 833 A1 betrifft eine Fahrerassistenzvorrichtung sowie ein Verfahren zur Unterstützung des Fahrzeugführers eines Kraftfahrzeugs. Darin wird unter anderem ausgeführt, dass eine Radareinrichtung mittels des Doppler-Effekts zur Ermittlung einer Relativgeschwindigkeit von in einem Umfeldbereich detektierten Objekten verwendet werden kann. Anhand der detektierten Relativgeschwindigkeit zu einem ortsfesten Objekt kann die reale Fahrzeuggeschwindigkeit des Kraftfahrzeugs ermittelt werden. In DE 10 2016 106 383 A1 wird vorgeschlagen, die Geschwindigkeit des eigenen Kraftfahrzeugs durch Vermessung der Relativgeschwindigkeit zu einem stationären Zielobjekt zu ermitteln.

DE 691 10 079 T2 betrifft einen bordseitigen Geschwindigkeitsmesser zum Messen der Absolutgeschwindigkeit eines zu kontrollierenden Fahrzeugs, welcher an Bord eines Kontrollfahrzeugs untergebracht ist. Der Geschwindigkeitsmesser umfasst einen ersten Geschwindigkeitsmesser zum Messen der Referenzgeschwindigkeit des Kontrollfahrzeugs und einen zweiten Geschwindigkeitsmesser zum Messen der Relativgeschwindigkeit zwischen den Fahrzeugen durch den Dopplereffekt, so dass sich die Absolutgeschwindigkeit des zu kontrollierenden Fahrzeugs als Summe dieser Geschwindigkeiten ergibt.

US 2008/0029192 A1 betrifft eine Reifenverformungs-Messmethode, bei der leitfähige Teile in den Reifen eingebracht werden, die in Umfangsrichtung in vordefinierten Abständen aufeinanderfolgen und in zwei Schichten angeordnet sind. Ein im Radhaus angeordneter Sensor vermisst die leitfähigen Teile mittels elektromagnetischen Wellen, wobei eine Verformung durch eine Laufzeitabweichung detektiert wird.

DE 10 2008 037 233 A1 offenbart einen Fahrzeugklassifikator mit einer Einrichtung zur Erkennung eines rollenden Rades mittels einer Radar-Geschwindigkeitsmessung. Dabei werden die Umfangsgeschwindigkeiten einzelner Umfangsabschnitte des Rades zu der Fortbewegungsgeschwindigkeit eines mit dem Rad verbundenen, bewegten Systems in Beziehung gesetzt_{.} Weiteren Stand der Technik bilden DE 10 2012 021 461 A1 und DE 10 2015 009 308 A1.

Der Erfindung liegt die Aufgabe zugrunde, eine verlässliche, neuartige Möglichkeit zur Vermessung der Geschwindigkeit eines insbesondere parallel zum eigenen Kraftfahrzeug bewegten weiteren Verkehrsteilnehmers anzugeben.

Zur Lösung dieser Aufgabe ist bei einem Verfahren der eingangs genannten Art erfindungsgemäß vorgesehen, dass durch Auswertung der Radardaten zum einen die obere und untere Begrenzung wenigstens eines der Räder des Verkehrsteilnehmers markierende Reflexionszentren lokalisiert und hierdurch ein Radradius bestimmt wird und zum anderen durch Auswertung von zyklisch wiederkehrenden Reflexionsmustern des wenigstens einen Rades, insbesondere der Felgen des wenigstens einen Rades, im zeitlichen Verlauf der Radardaten eine Winkelgeschwindigkeit des wenigstens einen Rades ermittelt wird, wobei die absolute Geschwindigkeit des Verkehrsteilnehmers aus der Winkelgeschwindigkeit und dem Radradius des wenigstens einen Rades ermittelt wird.

Erfindungsgemäß wird mithin vorgeschlagen, eine indirekte Geschwindigkeitsmessung weiterer Verkehrsteilnehmer mit Rädern, insbesondere also von PKWs, LKWs, Radfahrern und dergleichen, durch die Erfassung der Radbewegungen bei bewegten Zielen mit geringer relativer Radialbewegung zum eigenen Kraftfahrzeug mittels eines Radarsensors durchzuführen. Dabei wird die Verfügbarkeit von modernen, hochgenau messenden Radarsensoren, insbesondere von Halbleiter-Radarsensoren, ausgenutzt, nachdem sich überraschend einige Detektionseigenschaften gezeigt haben, die im Rahmen einer solchen indirekten Geschwindigkeitsmessung genutzt werden können. Dabei liegen der vorliegenden Erfindung eine Mehrzahl von Erkenntnissen zugrunde, die erfindungsgemäß zusammengeführt werden, um eine neuartige Bestimmung der absoluten Geschwindigkeit eines solchen, insbesondere parallel zum eigenen Kraftfahrzeug fahrenden Verkehrsteilnehmers zu ermitteln.

Bei einer parallelen Fahrt mit längsausgedehnten Objekten, mithin weiteren Verkehrsteilnehmern, werden von den Radarsensoren des eigenen Kraftfahrzeugs keine oder nur äußerst geringe, ungenau erfassbare radiale Bewegungen dieser Verkehrsteilnehmer, beispielsweise von deren Karosserie, erfasst. Jedoch wurde, wie bereits in der eingangs genannten DE 10 2015 004 468 A1, festgestellt, dass ein Radarsensor stärker Felgenreflexionen empfängt. Nun wurde zum einen festgestellt, dass unter Einsatz neuer, insbesondere auf CMOS-Technologie basierender Halbleiter-Technologien mit einer Steigerung der Frequenzbandbreite und der Winkelauflösung in Azimut und in Elevation bestimmte, sich wiederholende Reflexionsmuster von Rädern weiterer Verkehrsteilnehmer erfasst werden, die mit bisherigen Radartechnologien nicht erkennbar waren. Durch das Rotieren der Räder entstehen mithin periodische Reflexionsmuster, die die Rotationsgeschwindigkeit und somit Winkelgeschwindigkeit des Rades beschreiben. Ferner wurde aber auch festgestellt, dass bei Einsatz solcher moderner Radartechnologien zwei ausgeprägte, starke Reflexionszentren (Streuzentren) festgestellt werden, die dem oberen und dem unteren Rand der Räder, insbesondere also der Reifen, zuzuordnen sind. Dadurch ergibt sich aber die Möglichkeit, den Raddurchmesser und somit auch den Radradius zu ermitteln, woraus gemeinsam mit der Winkelgeschwindigkeit jedoch die Bewegungsgeschwindigkeit des weiteren Verkehrsteilnehmers als Produkt des Radradius und der Winkelgeschwindigkeit folgt.

Mithin wird konkret vorgeschlagen, die Winkelgeschwindigkeit wenigstens eines Rades des weiteren Verkehrsteilnehmers durch die Rotation der Felgenstrukturen zu erfassen, wobei mit besonderem Vorteil die Bestimmung der Winkelgeschwindigkeit über mehrere Umdrehungen des Rades erfolgt, so dass insbesondere auch eine Plausibilitätsprüfung erfolgen kann. Ferner können durch die zwei ausgeprägten Reflexionspunkte des Rades (oben und unten) Raddurchmesser und somit Radradien ermittelt werden, woraus wiederum die Geschwindigkeit des fremden Verkehrsteilnehmers ohne Erfassung der radialen Bewegung vermessen werden kann.

Unter Verwendung der eingangs bereits diskutierten, modernen Radartechnologien ist es mithin möglich, Radarsensoren in Kraftfahrzeugen zu verwenden, die trotz platzsparender Größe hochaufgelöst den Ort einer Reflexion wiedergeben können. Beispielsweise ist die Verwendung von Radarsensoren im Rahmen der vorliegenden Erfindung denkbar, die eine Ortsauflösung kleiner als 5 cm, insbesondere kleiner als 3,5 cm, bieten. Dies ermöglicht es, in den Radardaten auch kleinere Strukturen aufzulösen und entsprechend zu detektieren. Nachdem also bislang Radardaten hauptsächlich die Präsenz von Objekten, seien es statische oder dynamische Objekte, als solche wiedergegeben haben, ist es nun möglich, auch Eigenschaften, insbesondere Unterstrukturen, dieser Objekte aufzulösen und zweckmäßig zu nutzen.

Zweckmäßigerweise können die Räder des weiteren Verkehrsteilnehmers mittels der Felgen als Hauptreflexionszentren in einem insbesondere auf eine Seitenansicht bezogenen, Radardaten des weiteren Verkehrsteilnehmers enthaltenden Bereich detektiert werden. Es hat sich gezeigt, dass eine besonders gut detektierbare und nutzbare Unterstruktur anderer Verkehrsteilnehmer, insbesondere anderer Kraftfahrzeuge, durch die Felgen gegeben ist. Untersuchungen haben gezeigt, dass die Felgen die Hauptstreuzentren der Reflexionen auf der seitlichen Oberfläche eines Verkehrsteilnehmers, insbesondere eines Zielfahrzeugs, darstellen. Durch die Verfügbarkeit modernerer Radarsensoren in Kraftfahrzeugen ist es möglich, den Ort dieser hauptsächlichen Streuzentren relativ genau aufzulösen, so dass die Räder des weiteren Verkehrsteilnehmers detektiert werden können.

Das erfindungsgemäße Vorgehen eignet sich insbesondere für Anwendungsfälle, in denen sich der weitere Verkehrsteilnehmer in paralleler Fahrt, insbesondere im auch vom Kraftfahrzeug selbst eingenommenen Längsbereich, befindet, nachdem gerade für solche Fälle, in denen durch Umgebungssensoren nur eine seitliche Ansicht des Verkehrsteilnehmers möglich war, eine Bestimmung der absoluten Geschwindigkeit nicht verlässlich möglich war. Diese Detektionslücke kann im Rahmen der vorliegenden Erfindung nun gefüllt werden.

Dabei sei darauf hingewiesen, dass Hauptreflexionszentren, insbesondere zur Detektion der Felgen und erfindungsgemäß des oberen/unteren Randes des Rades, in Radardaten festgestellt werden können. Einzelne Reflexionsereignisse, die in den Radardaten enthalten sind, werden, insbesondere im Rahmen einer Vorauswertung, einem bestimmten Objekt, hier einem weiteren Verkehrsteilnehmer, zugeordnet. Nachdem ein hochauflösender Radarsensor verwendet wird, entsteht mithin ein durch Reflexionen abgedeckter Bereich, in dem die Hauptreflexionszentren (Hauptstreuzentren) leicht durch entsprechende Analysealgorithmen lokalisiert werden können. Übliche Verarbeitungsalgorithmen zur Segmentierung von Verkehrsteilnehmern in Radardaten sind bereits bekannt; zur Detektion der Reflexionszentren können insbesondere auch Algorithmen aus der Bildverarbeitung auf die Radardaten übertragen werden, nachdem diese in einer bestimmten räumlichen Auflösung als eine Art "Bild" des Verkehrsteilnehmers vorliegen. Hauptreflexionszentren können auch durch die Betrachtung von Intensitätsverläufen oder dergleichen bestimmt werden. Auch bezüglich der Detektion zeitlich periodisch wiederkehrender Muster in Radardaten bzw. sonstigen Daten sind im Stand der Technik bereits eine Vielzahl von Algorithmen bekannt, so dass auch diesbezüglich eine Bestimmung der Winkelgeschwindigkeit leicht ermöglicht wird. Dabei sei darauf hingewiesen, dass es im Rahmen der vorliegenden Erfindung grundsätzlich möglich und bevorzugt ist, lediglich Radardaten einzusetzen, es jedoch auch denkbar ist, weitere Sensordaten, beispielsweise einer Kamera, ergänzend heranzuziehen.

Wie bereits erwähnt wurde, nutzt die Erfindung das Bekanntwerden von neuen, hochauflösenden, modernen Radartechnologien aus. Eine besonders vorteilhafte Ausgestaltung der vorliegenden Erfindung kann dabei vorsehen, dass ein Radarsensor mit einem durch einen Halbleiterchip, insbesondere einem CMOS-Chip, realisierten Radartransceiver verwendet wird. Besonders vorteilhaft ist es in diesem Zusammenhang, wenn neben dem Radar-transceiver auch eine digitale Signalverarbeitungskomponente (DSP) und/oder eine Steuereinheit des Radarsensors durch den Halbleiterchip realisiert werden und/oder eine Antennenanordnung des Radarsensors mit dem Halbleiterchip als ein Package realisiert ist. Auf diese Weise können äußerst kleinbauende, leicht im Kraftfahrzeug unterbringbare Radarsensoren geschaffen werden, die aufgrund der kurzen Signalwege auch ein hervorragendes Signal-zu-Rausch-Verhältnis erlauben. Mit derartigen Radarsensoren auf Halbleiterbasis, insbesondere CMOS-Basis, lässt sich auch ein Betrieb bei hohen Frequenzen und mit hoher Frequenzbandbreite realisieren.

Insbesondere für den Fall eines in Halbleitertechnologie realisierten Radarsensors, aber auch allgemein, ist es in diesem Kontext äußerst zweckmäßig, wenn der Radarsensor in einem Frequenzbereich von 77 bis 81 GHz und/oder mit einer Frequenzbandbreite größer als 1 GHz, insbesondere von 4 GHz, betrieben wird.

Durch ein hochauflösendes Radarsystem mit 4 GHz Bandbreite kann eine sehr hohe Abstandsauflösung, beispielsweise von ca. 3,4 cm, relativ zu herkömmlichen, bislang eingesetzten Automotive-Radarsensoren erreicht werden. Die Auflösung korreliert auch mit der Abstandmessgenauigkeit, das bedeutet, mit höherer Auflösung ist auch die Genauigkeit sehr hoch. Hierdurch können beispielsweise die Positionen der Felgen und Ränder, aber auch allgemein Positionsinformationen, sehr genau vermessen werden.

Ferner kann vorgesehen sein, dass der Radarsensor mit einer Zykluszeit von weniger als 50 ms misst, beispielsweise von 20 ms oder 40 ms. Die Umdrehungs- bzw, Rotationszeit des wenigstens einen Rades des weiteren Verkehrsteilnehmers ist mithin sehr langsam gegenüber der Zykluszeit, was eine hochgenaue Vermessung der Winkelgeschwindigkeit erlaubt.

Eine zweckmäßige Weiterbildung der Erfindung sieht vor, dass mehrere, insbesondere acht, Radarsensoren verwendet werden, die die Umgebung des Kraftfahrzeugs in einem 360°-Winkelbereich vollständig abdecken. Beispielsweise ist es möglich, eine Anordnung von acht Radarsensoren zu verwenden, von denen jeweils drei im vorderen und im hinteren Stoßfänger verbaut werden können. Zwei weitere, seitlich ausgerichtete Radarsensoren können beispielsweise in Türen des Kraftfahrzeugs vorgesehen werden, insbesondere, indem ein radardurchlässiges, lackierbares Fenster im Türblech vorgesehen wird. Nachdem es sich bei den mehreren Radarsensoren zweckmäßigerweise um Weitwinkel-Radarsensoren handelt, beispielsweise mit einem Öffnungswinkel von bis zu 170°, beispielsweise 160°, im Azimut und von bis zu 120°, beispielsweise 90°, in der Elevation, wird somit die gesamte Umgebung rund um das Kraftfahrzeug zuverlässig abgedeckt. Dabei sind bei der Betrachtung von auf gleicher Höhe parallel fahrenden Verkehrsteilnehmern die seitlich ausgerichteten Radarsensoren besonders relevant. Allerdings ist selbstverständlich auch ein Einsatz des Verfahrens für sonstige Verkehrsteilnehmer, beispielsweise querende Verkehrsteilnehmer, denkbar, für die dann die vorderen beziehungsweise hinteren Radarsensoren relevanter sind.

In zweckmäßiger Ausgestaltung kann die Geschwindigkeit des weiteren Verkehrsteilnehmers durch ein Fahrerassistenzsystem, insbesondere ein Sicherheitssystem, ausgewertet werden. Als Fahrerassistenzsystem kann beispielsweise ein Sicherheitssystem verwendet werden, wobei die absolute Geschwindigkeit bei der Ermittlung eines eine mögliche Kollision mit dem jeweiligen Verkehrsteilnehmer beschreibenden Kollisionswertes berücksichtigt wird. Beispielsweise kann die ermittelte absolute Geschwindigkeit eines weiteren Verkehrsteilnehmers genutzt werden, wenn dessen zukünftige Trajektorie extrapoliert oder anderweitig abgeschätzt werden soll. Dabei ist ein Hauptanwendungsgebiet, wie bereits dargelegt wurde, das parallele Fahren, so dass das Fahrerassistenzsystem insbesondere ein Totwinkelüberwachungssystem und/oder ein Spurwechselassistenzsystem ist, beispielsweise ein Totwinkelwarner. Durch die Bewertung der absoluten Geschwindigkeit eines Zielfahrzeugs relativ zum eigenen Kraftfahrzeug kann beispielsweise eine Warnung zum richtigen Zeitpunkt ausgelöst werden und/oder ein Zeitfenster für ein Spurwechsel besser prädiziert werden.

Dabei sei an dieser Stelle noch angemerkt, dass das erfindungsgemäße Verfahren nicht zwangsläufig durch ein (ausschließlich) dem Fahrerassistenzsystem zugeordnetes Steuergerät durchgeführt werden muss, sondern insbesondere im Fall mehrerer die absolute Geschwindigkeit nutzender Funktionen unterschiedlicher Fahrerassistenzsysteme ein zentrales Steuergerät vorgesehen sein kann, welches dann bevorzugt die Sensordaten, umfassend auch die Radardaten, verschiedener Umgebungssensoren des Kraftfahrzeugs auswertet, um bereits geeignete Eingangsdaten für die verschiedenen Funktionen zur Verfügung zu stellen, beispielsweise in Form eines Umfeldmodells, wie es im Stand der Technik grundsätzlich bereits vorgeschlagen wurde. Ist das Umfeldmodell objektorientiert, können beispielsweise anderen Verkehrsteilnehmern ihre absoluten Geschwindigkeiten dort unmittelbar zugeordnet werden. Führt das die Sensordaten derart vorauswertende Steuergerät auch die Funktionen durch, kann auch von einem "zentralen Fahrerassistenzsystem" gesprochen werden, welches eine Vielzahl von Funktionen einzelner Sub-Fahrerassistenzsysteme realisiert.

Neben dem Verfahren betrifft die Erfindung auch ein Kraftfahrzeug, aufweisend wenigstens ein Fahrerassistenzsystem und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, mit welchen ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen in dem Kraftfahrzeug eingesetzter Radarsensor,
- Fig. 3: eine Parallelfahrtsituation eines weiteren Verkehrsteilnehmers zu dem Kraftfahrzeug,
- Fig. 4: eine Seitenansicht mit Reflexionszentren des weiteren Verkehrsteilnehmers,
- Fig. 5: eine Skizze zur Ermittlung des Radradius, und
- Fig. 6: eine Skizze zur Ermittlung der Winkelgeschwindigkeit.

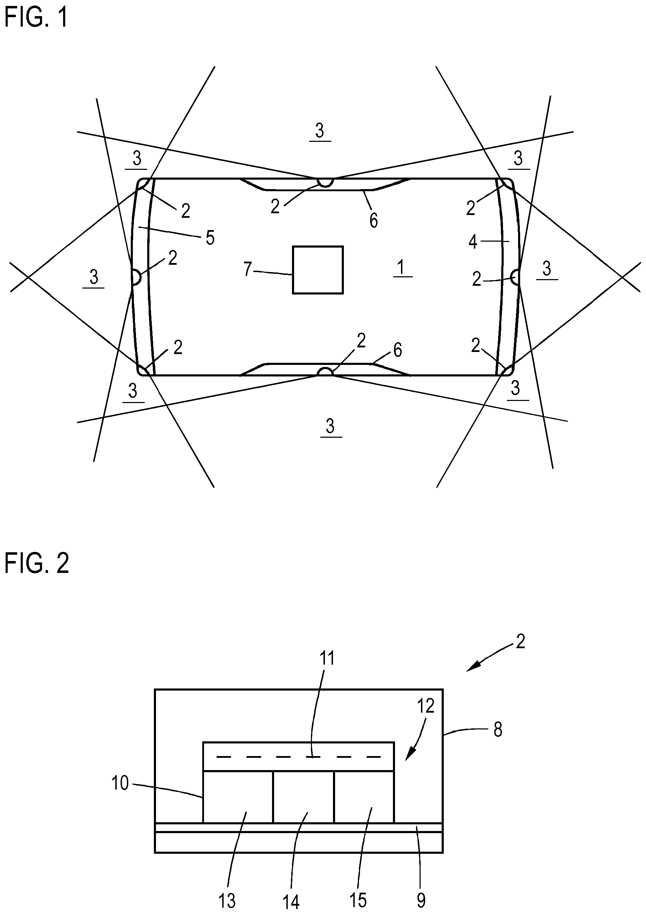

Fig. 1 zeigt eine Prinzipskizze eines erfindungsgemäßen Kraftfahrzeugs 1. Dieses weist vorliegend acht Radarsensoren 2 auf, die als Weitwinkel-Radarsensoren ausgebildet sind und, wie anhand der angedeuteten Erfassungsbereiche 3 ersichtlich ist, eine 360°-Erfassung des Umfelds des Kraftfahrzeugs 1 erlauben. Dabei sind die Radarsensoren 2 basierend auf CMOS-Technologie äußerst kleinbauend realisiert, beispielsweise kleiner als 3 cm mal 3 cm, so dass sie im vorderen bzw. hinteren Stoßfänger 4, 5 des Kraftfahrzeugs 1 verbaut werden können und auch ein Verbau in seitlichen Türen 6 möglich ist, wenn beispielsweise ein radardurchlässiges Fenster im Blech vorgesehen wird.

Die Radardaten der Radarsensoren 2 werden in einem Steuergerät 7 ausgewertet, welches einem Fahrerassistenzsystem, hier einem Spurwechselassistenzsystem, zugeordnet und auch zur Durchführung des erfindungsgemäßen Verfahrens ausgebildet ist.

Fig. 2 zeigt in Form einer Prinzipskizze den Aufbau der Radarsensoren 2 genauer. Ein Radarsensor 2 weist ein Gehäuse 8 auf, in dem eine Leiterplatte 9 gehaltert ist, auf der ein Halbleiterchip 10, hier ein CMOS-Chip, angeordnet ist. Der Halbleiterchip 10 ist gemeinsam mit einer Antennenanordnung 11 des Radarsensors 2 als ein Package 12 realisiert, wobei die Antennenanordnung 11 so ausgestaltet ist, dass Winkel zu einem reflektierenden Punkt in zwei zueinander senkrechten Ebenen erfasst werden können.

Durch den Halbleiterchip 10 werden vorliegend neben dem Radartransceiver 13 auch eine digitale Signalverarbeitungskomponente 14 (DSP) und eine Steuereinheit 15 des Radarsensors 2 realisiert.

Die Radarsensoren 2 werden in einem Frequenzbereich von 77 bis 81 GHz bei einer Frequenzbandbreite von 4 GHz betrieben, um hochauflösend, hier mit einer Auflösung von 3,4 cm, das Umfeld des Kraftfahrzeugs 1 beschreibende Radardaten liefern zu können. Die Zykluszeit kann dabei beispielsweise 20 ms oder 40 ms betragen.

Im Steuergerät 7 werden diese Radardaten nun ausgewertet, um die absoluten Geschwindigkeiten weiterer Verkehrsteilnehmer zum eigenen Kraftfahrzeug 1 bestimmen zu können. Hierzu wird in dem dem jeweiligen Verkehrsteilnehmer zugeordneten Bereich, in dem also Reflektionen des Verkehrsteilnehmers empfangen wurden, nach den Hauptstreuzentren, insbesondere im unteren Bereich, gesucht, welche den Felgen des Zielfahrzeugs als weiterer Verkehrsteilnehmer entsprechen. Dabei können verschiedene Arten von Algorithmen eingesetzt werden, die beispielsweise Intensitätsverläufe auswerten oder auch an Bildverarbeitungsalgorithmen angelehnt sind. Nachdem die Radarsensoren 2 eine hohe Ortsauflösung besitzen, können die Positionen der Felgen und somit der Räder recht genau bestimmt werden.

Weitere, den Hauptreflexionszentren vertikal benachbarte Reflexionszentren können nun aufgefunden werden, welche den oberen und den unteren Rand des jeweiligen Rades anzeigen, so dass ein Radradius bestimmt werden kann. Für die Felgen wird im zeitlichen Verlauf der Radardaten ein periodisches Muster festgestellt, beispielsweise ausgelöst durch die sich drehenden Felgenarme, aus dem auf die Winkelgeschwindigkeit geschlossen werden kann. Dabei werden für eine verlässliche Datenbasis und ggf. Plausibilisierungen zeitlich mehrere Umdrehungen betrachtet. Der Radradius wird im Steuergerät 7 mit der Winkelgeschwindigkeit multipliziert, um die absolute Geschwindigkeit des weiteren Verkehrsteilnehmers zu erhalten.

Werden Radardaten zu mehreren Rädern eines weiteren Verkehrsteilnehmers erfasst, können die absoluten Geschwindigkeiten auch statistisch kombiniert bzw. gegeneinander plausibilisiert werden.

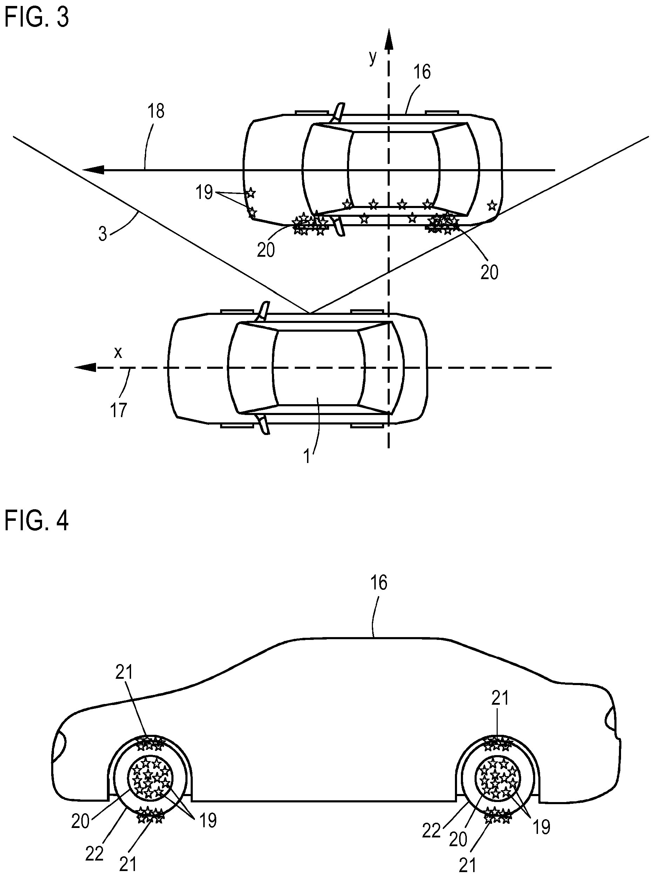

Fig. 3 zeigt eine beispielhafte Verkehrssituation, in der sich zu dem Kraftfahrzeug 1 ein weiteres Kraftfahrzeug 16 in Parallelfahrt befindet, mithin auf gleicher Höhe in im Wesentlichen dieselbe beziehungsweise eine ähnliche Richtung wie das Kraftfahrzeug 1 unterwegs ist. Dabei ist die Längsachse und Fahrtrichtung des eigenen Kraftfahrzeugs 1 mit 17 bezeichnet, die Längsachse und Fahrtrichtung des anderen Kraftfahrzeugs 16 als Verkehrsteilnehmer mit 18. Ersichtlich ist in Fig. 3 ein Fall gezeigt, in dem die Kraftfahrzeuge 1, 16 vollständig parallel zueinander fahren.

Der auf der rechten Seite des Kraftfahrzeugs 1 vorgesehene, hier nur durch den Erfassungsbereich 3 angedeutete Radarsensor 2 erfasst eine Seitenansicht des Kraftfahrzeugs 16, siehe auch Fig. 4, wobei Reflexionszentren 19 durch Sterne gekennzeichnet sind. Ersichtlich werden die meisten Reflexionsereignisse im Bereich der Felgen 20 des Kraftfahrzeugs 16 gemessen. Die Felgen 20 bilden mithin die Hauptreflexionszentren. Weitere Reflexionszentren 21 ergeben sich am oberen und unteren Rand der Räder 22.

Fig, 5 erläutert die Bestimmung des Radradius genauer. Aus den Reflexionszentren 21 ergibt sich der Durchmesser 23, dessen Hälfte der Radradius ist.

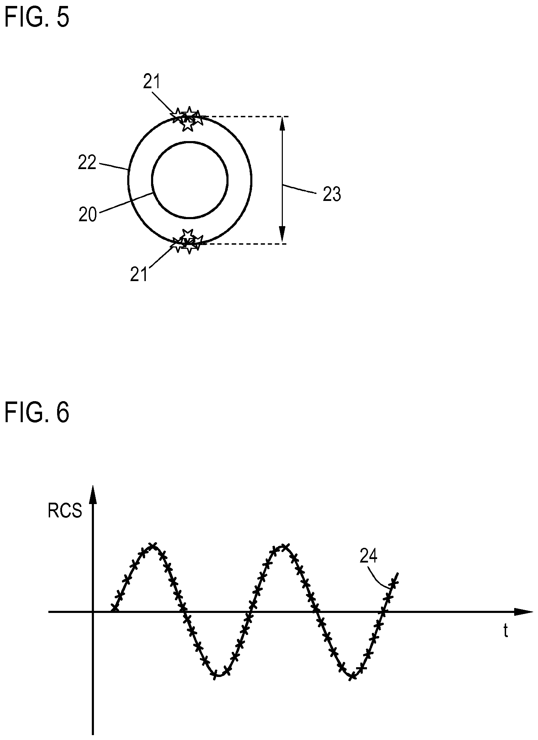

Fig. 6 zeigt einen beispielhaften periodischen Verlauf 24 eines Radarsignals, beispielsweise für den Arm einer Felge 20, wobei der Radarquerschnitt (RCS) gegen die Zeit (t) aufgetragen ist. Hieraus lässt sich die Winkelgeschwindigkeit ableiten.

## Patentansprüche

1. Verfahren zur Ermittlung einer absoluten Geschwindigkeit eines weiteren, Räder (22) aufweisenden Verkehrsteilnehmers in einem Kraftfahrzeug (1), welches wenigstens einen Radardaten des insbesondere parallel zu dem Kraftfahrzeug (1) fahrenden, weiteren Verkehrsteilnehmers erfassenden Radarsensor (2) aufweist,
**dadurch gekennzeichnet,**
**dass** durch Auswertung der Radardaten zum einen die obere und untere Begrenzung wenigstens eines der Räder (22) des weiteren Verkehrsteilnehmers markierende Reflexionszentren (21) lokalisiert und hierdurch ein Radradius bestimmt wird und zum anderen durch Auswertung von zyklisch wiederkehrenden Reflexionsmustern des wenigstens einen Rades (22), insbesondere der Felgen (20) des wenigstens einen Rades (22), im zeitlichen Verlauf der Radardaten eine Winkelgeschwindigkeit des wenigstens einen Rades (22) ermittelt wird, wobei die absolute Geschwindigkeit des Verkehrsteilnehmers aus der Winkelgeschwindigkeit und dem Radradius des wenigstens einen Rades (22) ermittelt wird.

2. Verfahren nach Anspruch 1,
**dadurch gekennzeichnet,**
**dass** die Räder (22) des weiteren Verkehrsteilnehmers mittels der Felgen (20) als Hauptreflexionzentren in einem insbesondere auf eine Seitenansicht bezogenen, Radardaten des weiteren Verkehrsteilnehmers enthaltenden Bereich detektiert werden.

3. Verfahren nach Anspruch 1 oder 2,
**dadurch gekennzeichnet,**
**dass** ein Radarsensor (2) mit einem durch einen Halbleiterchip (10), insbesondere CMOS-Chip, realisierten Radartransceiver (13) verwendet wird.

4. Verfahren nach Anspruch 3,
**dadurch gekennzeichnet,**
**dass** neben dem Radartransceiver (13) auch eine digitale Signalverarbeitungskomponente (14) und/oder eine Steuereinheit (15) des Radarsensors (2) durch den Halbleiterchip (10) realisiert werden und/oder eine Antennenanordnung (11) des Radarsensors (2) mit dem Halbleiterchip (10) als ein Package (12) realisiert ist.

5. Verfahren nach einem der vorangehenden Ansprüche,
**dadurch gekennzeichnet,**
**dass** der Radarsensor (2) in einem Frequenzbereich von 77 bis 81 GHz und/oder mit einer Frequenzbandbreite größer als 1 GHz, insbesondere von 4 GHz, betrieben wird und/oder mit einer Zykluszeit von weniger als 50 ms misst.

6. Verfahren nach einem der vorangehenden Ansprüche,
**dadurch gekennzeichnet,**
**dass** mehrere, insbesondere acht, Radarsensoren (2) verwendet werden, die die Umgebung des Kraftfahrzeugs (1) in einem 360°-Winkelbereich vollständig abdecken.

7. Verfahren nach einem der vorangehenden Ansprüche,
**dadurch gekennzeichnet,**
**dass** die Geschwindigkeit des weiteren Verkehrsteilnehmers durch ein Fahrerassistenzsystem, insbesondere ein Sicherheitssystem, ausgewertet wird.

8. Verfahren nach Anspruch 7,
**dadurch gekennzeichnet,**
**dass** das Fahrerassistenzsystem ein Totwinkelüberwachungssystem und/oder ein Spurwechselassistenzsystem ist.

9. Kraftfahrzeug (1), aufweisend wenigstens einen Radarsensor (2), wenigstens ein Fahrerassistenzsystem und ein zur Durchführung des Verfahrens nach einem der vorangehenden Ansprüche ausgebildetes, insbesondere dem Fahrerassistenzsystem zugeordnetes und/oder zentrales, Steuergerät (7).

## Claims

1. Method for determining an absolute velocity of a further road user having wheels (22) in a motor vehicle (1) which has at least one radar sensor (2) that detects radar data of the further road user travelling in particular parallel to the motor vehicle (1),
**characterised in that**
by evaluating the radar data, firstly, reflection centres (21) marking the upper and lower boundary of at least one of the wheels (22) of the further road user are located and a wheel radius is determined as a result, and, secondly, by evaluating cyclically recurring reflection patterns of the at least one wheel (22), in particular of the rims (20) of the at least one wheel (22), an angular velocity of the at least one wheel (22) is determined over the course of time of the radar data, wherein the absolute velocity of the road user is determined from the angular velocity and the wheel radius of the at least one wheel (22).

2. Method according to claim 1,
**characterised in that**
the wheels (22) of the further road user are detected by means of the rims (20) as main centres of reflection in a region which contains radar data relating to the further road user, in particular in relation to a side view.

3. Method according to claim 1 or 2,
**characterised in that**
a radar sensor (2) having a radar transceiver (13) implemented by a semiconductor chip (10), in particular a CMOS chip, is used.

4. Method according to claim 3,
**characterised in that**
in addition to the radar transceiver (13), a digital signal processing component (14) and/or a control unit (15) of the radar sensor (2) are also implemented by the semiconductor chip (10) and/or an antenna arrangement (11) of the radar sensor (2) is implemented with the semiconductor chip (10) as a package (12).

5. Method according to any of the preceding claims,
**characterised in that**
the radar sensor (2) is operated in a frequency range of 77 to 81 GHz and/or with a frequency bandwidth greater than 1 GHz, in particular of 4 GHz, and/or measures with a cycle time of less than 50 ms.

6. Method according to any of the preceding claims,
**characterised in that**
several, in particular eight, radar sensors (2) are used and completely cover the area surrounding the motor vehicle (1) in a 360° angular range.

7. Method according to any of the preceding claims,
**characterised in that**
the velocity of the further road user is evaluated by a driver assistance system, in particular a safety system.

8. Method according to claim 7,
**characterised in that**
the driver assistance system is a blind spot monitoring system and/or a lane change assistance system.

9. Motor vehicle (1) having at least one radar sensor (2), at least one driver assistance system and a control device (7) which is designed to perform the method according to any of the preceding claims, and is in particular associated with the driver assistance system and/or is central.

## Revendications

1. Procédé pour déterminer une vitesse absolue d'un autre usager de la route présentant des roues (22) dans un véhicule à moteur (1), lequel présente au moins un capteur radar (2) détectant des données radar de l'autre usager de la route se déplaçant en particulier parallèlement au véhicule à moteur (1),
**caractérisé en ce que**
l'évaluation des données radar permet d'une part de localiser des centres de réflexion (21) marquant les limites supérieure et inférieure d'au moins une des roues (22) de l'autre usager de la route et de déterminer ainsi un rayon de roue, et d'autre part par l'évaluation des modèles de réflexion à récurrence cyclique de la au moins une roue (22), en particulier les jantes (20) de la au moins une roue (22), une vitesse angulaire de la au moins une roue (22) est déterminée au cours du déroulement temporel des données radar, dans lequel la vitesse absolue de l'usager de la route est déterminée à partir de la vitesse angulaire et du rayon de roue de la au moins une roue (22).

2. Procédé selon la revendication 1,
**caractérisé en ce que**
les roues (22) de l'autre usager de la route sont captées au moyen des jantes (20) comme centres principaux de réflexion dans une zone contenant des données radar de l'autre usager de la route, en particulier dans une vue latérale.

3. Procédé selon la revendication 1 ou 2,
**caractérisé en ce que**
un capteur radar (2) avec un émetteur-récepteur radar (13) mis en œuvre par une puce semi-conductrice (10), en particulier une puce CMOS, est utilisé.

4. Procédé selon la revendication 3,
**caractérisé en ce que**
en plus de l'émetteur-récepteur radar (13), un composant de traitement de signaux numérique (14) et/ou une unité de commande (15) du capteur radar (2) sont également mis en œuvre par la puce semi-conductrice (10) et/ou un agencement d'antenne (11) du capteur radar (2) est mis en œuvre avec la puce semi-conductrice (10) en tant que paquet (12).

5. Procédé selon l'une quelconque des revendications précédentes,
**caractérisé en ce que**
le capteur radar (2) est exploité dans une plage de fréquence de 77 à 81 GHz et/ou avec une largeur de bande de fréquences supérieure à 1 GHz, en particulier de 4 GHz, et/ou mesure avec un temps de cycle inférieur à 50 ms.

6. Procédé selon l'une quelconque des revendications précédentes,
**caractérisé en ce que**
plusieurs, en particulier huit, capteurs radar (2) sont utilisés, lesquels couvrent entièrement l'environnement du véhicule à moteur (1) dans une plage angulaire de 360°.

7. Procédé selon l'une quelconque des revendications précédentes,
**caractérisé en ce que**
la vitesse de l'autre usager de la route est évaluée par un système d'assistance à la conduite, en particulier un système de sécurité.

8. Procédé selon la revendication 7,
**caractérisé en ce que**
le système d'assistance à la conduite est un système de surveillance des angles morts et/ou un système d'assistance au changement de voie.

9. Véhicule à moteur (1), présentant au moins un capteur radar (2), au moins un système d'assistance à la conduite et un dispositif de commande (7), en particulier associé au système d'assistance à la conduite et/ou central, réalisé pour l'exécution du procédé selon l'une quelconque des revendications précédentes.
